Europäisches Patentamt

European Patent Office

Office européen des brevets

(19)

(11) **EP 1 284 922 B1**

(12) **EUROPEAN PATENT SPECIFICATION**

(45) Date of publication and mention
of the grant of the patent:
**02.02.2005 Bulletin 2005/05**

(51) Int Cl.$^7$: **C01B 3/06**, B01J 7/02,
B01J 8/02

(21) Application number: **01933494.5**

(22) Date of filing: **14.05.2001**

(86) International application number:
**PCT/CA2001/000682**

(87) International publication number:
**WO 2001/085606 (15.11.2001 Gazette 2001/46)**

(54) **METHOD OF HYDROGEN GENERATION FOR FUEL CELL APPLICATIONS AND A HYDROGEN-GENERATING SYSTEM**

VERFAHREN ZUR WASSERSTOFFERZEUGUNG FÜR BRENNSTOFFZELLANWENDUNGEN UND WASSERSTOFFERZEUGUNGSSYSTEM

PRODUCTION D'HYDROGENE POUR APPLICATIONS DE PILES A COMBUSTIBLE ET SYSTEME DE PRODUCTION D'HYDROGENE

(84) Designated Contracting States:
**AT BE CH CY DE DK ES FI FR GB GR IE IT LI LU MC NL PT SE TR**

(30) Priority: **12.05.2000 CA 2308514**

(43) Date of publication of application:
**26.02.2003 Bulletin 2003/09**

(73) Proprietor: **McGILL UNIVERSITY**
**Montreal, Québec H3A 1B1 (CA)**

(72) Inventors:
• **ZALUSKI, Leszek**
**Montreal, Québec H4E 1Z6 (CA)**
• **ZALUSKA, Alicja**
**Montreal, Québec H4E 1Z6 (CA)**
• **STROM-OLSEN, John, Olaf**
**Westmount, Québec H3Y 2V2 (CA)**

(74) Representative: **Keen, Celia Mary**
**J.A. Kemp & Co.**
**14 South Square**
**Gray's Inn**
**London WC1R 5JJ (GB)**

(56) References cited:
**EP-A- 0 115 406          GB-A- 1 189 512**
**US-A- 4 155 712          US-A- 5 593 640**

EP 1 284 922 B1

## Description

### TECHNICAL FIELD

The invention discloses a method of generating hydrogen for fuel cell applications, based on a chemical reaction of metal hydrides with alcohols, the invention also relates to a hydrogen generator using such reaction is described.

### BACKGROUND ART

Fuel cells require a continuous supply of hydrogen and oxygen to produce electricity. At present however, storage and supply of hydrogen is the main limiting step in the use of fuel cell systems. For vehicular applications, large amounts of hydrogen, typically of the order of several kilograms, are needed on-board between refuelling. However, current methods of hydrogen storage not only cannot provide sufficient hydrogen capacity, or volumetric density, to compete with gasoline cars, but have additional serious limitations. For example, compressed hydrogen tanks operate at very high hydrogen pressure, typically 350 - 700 atm and so have a serious safety problem. Liquid hydrogen on the other hand needs cryogenic temperatures, typically about ten to fifteen degrees above absolute zero, and therefore requires costly and demanding cryogenic equipment. In the case of miniature fuel cells for portable applications, for example for laptops or cellular phones, the hydrogen storage is even more critical, because both of these storage methods are totally impractical on the small scale.

Metal hydrides offer a good solution for hydrogen storage: they are safe, stable and provide indefinite storage without hydrogen loss. In general, the use of metal hydrides is based on the reversible cycling of hydrogen absorption and desorption under certain pressure/temperature conditions. A variety of metal hydrides is known, having various hydrogen capacities and different pressure/temperature characteristics.

In general, metal hydrides can be divided into two groups:

a) "unstable" hydrides operating at room temperature. These hydrides require hydrogen pressure, typically between 2 and 5 atm, to be maintained in the tank, otherwise the hydrogen is immediately released from the hydride. These room-temperature hydrides, for example those based on $LaNi_5$ or FeTi, provide easy and fast hydrogen desorption, but have low hydrogen storage by weight, typically around 1 wt.%.

b) "stable" hydrides operating at elevated temperatures. These metal hydrides can indefinitely store hydrogen at room temperature, even without hydrogen overpressure. However, desorption requires raising the temperature, in some cases significantly. For example, Mg-based hydrides need to be heated to temperatures close to 300°C in order to release hydrogen. Although these hydrides have high hydrogen capacities, reaching 7.6 wt.% in the case of $MgH_2$, the high temperature of hydrogen desorption is a serious practical disadvantage.

Very few metal hydrides are known where thermodynamic properties allow reversible operation at moderate temperature, such as temperatures below or around 100°C, and also having good hydrogen capacity. One example is $NaAlH_4$, which can operate reversibly with good kinetics and hydrogen capacity of 5.6 wt.%, but only after advanced catalysis [1,2]. However, currently even catalyzed $NaAlH_4$ becomes impractically slow at temperatures below 100°C, which is required for the PEM fuel cell applications.

An alternative method for generating hydrogen from these stable hydrides without the need to raise the temperature is through a chemical reaction leading to the decomposition of the hydride. For example, water may be used to release hydrogen via hydrolysis reaction. Water reacts with certain metal hydrides, forming hydroxides and the release of gaseous hydrogen.
Hydrolysis has been used in a series of hydrogen generators. For example, U.S. Pat. 4,155,712 [3] discloses a small generator containing metal hydride which produces hydrogen in the reaction with water vapor. Another U.S. Pat. 4,356,163 [4] discloses utilizing a chemical reaction of an alkali metal with water for the hydrogen generation.

Examples of the hydrolysis reaction are as follows:

$$LiH + H_2O \Rightarrow LiOH + \tfrac{1}{2}\,H_2 \uparrow$$

$$CaH_2 + 2\,H_2O \Rightarrow Ca(OH)_2 + 2\,H_2 \uparrow$$

$$NaH + H_2O \Rightarrow NaOH + H_2 \uparrow$$

Generation of hydrogen by a hydrolysis reaction is effective, but has disadvantages. One is that hydrolysis reactions are usually violent and generate large amounts of heat. Once started, they are extremely difficult to control and may proceed in an explosive manner. For example, in the case of $LiAlH_4$, the heat of hydrolysis causes a very rapid increase of temperature, which results in an instant thermal decomposition of the hydride, so that the reaction cannot be controlled by simply limiting the amount of water, and proceeds rapidly once initiated. One way around this is to immerse the hydride in a mineral oil [5], which makes the reaction more controllable. This however reduces the effective hydrogen capacity at least by half, because the oil-based slurry needs to contain about 50 wt.% of the mineral oil. Another method to avoid explosive reaction is disclosed in U.S. Patent 5,593,640 [6], where a combination of adiabatic hydrolysis and thermal decomposition is claimed to provide a controllable generation of hydrogen. In this generator, $LiAlH_4$ is allowed to undergo hydrolysis only at temperatures exceeding the temperature of the initiation of thermal decomposition, which is effected by heating the hydride before hydrolysis in a complex generator. The use of sodium hydride instead of lithium hydrides results in a less violent reaction, but at the expense of hydrogen capacity, which is reduced simply because sodium is much heavier than lithium. A hydrogen generator based on the hydrolysis of sodium hydride is disclosed in U.S. Patents 5,728,464 and 5,817,157 [7,8]. This reaction has however another disadvantage. It requires a significant excess of water, because the reaction product, sodium hydroxide, causes solidification of the solution when its content exceeds 50 mol%, thus stalling any further hydrolysis. Among other hydrides, $NaBH_4$ reacts with water only when specially catalysed, for example by a special Ru-based catalyst [9]. In this case however, the same problems as with NaH occur, namely precipitation of the solid reaction product, $NaBO_2$, which requires the $NaBH_4$ solution to be diluted to 20 mol% of $NaBH_4$ and thus results in reduced hydrogen capacity. Another technical problem is that controlling the reaction can be done only by either immersing the catalyst in the solution, which promotes the reaction or by completely removing the catalyst from the solution, which stops the reaction, so that intermediate reaction rates are not accessible. In another design of the hydrogen generator it was pointed out that for portable applications the heat of hydrolysis of $NaBH_4$, $LiBH_4$, $LiAlH_4$ or $NaAlH_3$ is so large that the hydrolysis-based generators could be too hot to be practical. In these cases the heat of hydrolysis is used to generate steam for the steam-hydrolysis of the hydrides [10].

All hydrolysis reactions have also one common problem: the use of water limits the temperature range of the hydrogen generator to temperatures above 0°C, to avoid freezing of the water. This is a serious limitation for the outdoor use of the hydrolysis-based generators in a cold climate, which may require a "cold start-up" at temperatures below -20°C, or even -40°C.

Thus at present, none of the above methods of storing and generating hydrogen represents a fully efficient, safe and reliable source of hydrogen for fuel cells. All the above methods suffer from serious limitations and therefore alternative methods of hydrogen generation are needed. It is the aim of the present invention to offer such an alternative method.

## DISCLOSURE OF THE INVENTION

In accordance with one aspect of the invention there is provided a process for generating hydrogen for a fuel cell comprising: reacting a metal hydride other than $NaAlH_4$ with at least one alcohol, to generate hydrogen, and feeding, the hydrogen to a hydrogen compartment of a fuel cell. In accordance with another aspect of the invention there is provided a fuel cell comprising a hydrogen generator and a hydrogen compartment; said hydrogen generator comprising: a) a first housing containing a metal hydride other than $NaAlH_4$; b) a second housing containing at least one alcohol for reaction with said metal hydride, c) flow means for delivery of said at least one alcohol from said second housing to said first housing, and d) hydrogen gas outlet means in said first housing for delivery of generated hydrogen gas from said first housing to said hydrogen compartment.

## DETAILED DESCRIPTION OF THE INVENTION AND DESCRIPTION OF PREFERRED EMBODIMENTS

The present invention relates to a new method of hydrogen generation for fuel cell applications. In this method, hydrogen is produced from a metal hydride in a chemical reaction with an alcohol. The metal hydride may be a simple metal hydride or a complex metal hydride. In the case of a simple metal hydride the reaction proceeds by the following generic reaction which is the basis for the hydrogen production:

$$MH_x + x\ ROH \Rightarrow M(OR)_x + x\ H_2 \uparrow$$

in which $MH_x$ is a simple metal hydride and ROH is an alcohol. In the above metal hydride M is, by way of example, typically Li, Na, K, Mg, Ca, Be, Sr, K, Nb, Zr or Ti; R is typically an alkyl group of 1 to 10, preferably 1 to 6 and more preferably 1 to 4 carbon atoms, for example, methyl, ethyl, n-propyl, iso-propyl, n-butyl, sec.butyl or tert.butyl. The designation x is an integer typically of 1 to 4.

In this reaction, the metal atom (M) from the hydride substitutes hydrogen in the hydroxyl group (OH) in the alcohol. As a result, another compound is formed, namely, an alkoxide, and hydrogen is released from the metal hydride and, from the alcohol.

The above exemplification of the process is made for ease of description for the case of a simple metal hydride; however, the hydrogen generation proceeds similarly with complex metal hydrides and with mixtures of simple and complex metal hydrides.

By way of example, complex metal hydrides which may be employed in the invention include those of formula:

$$M^2_v M^3_w H_y$$

in which $M^2$ is metal selected from the group consisting of U, Na, K, Mg, Ca, Fe and Zr; $M^3$ is selected from the group consisting of Al, B, Be and Ti; v is an integer of 1 to 3; w is an integer of 1 to 3; and y is an integer of 4 to 8. However, the invention extends to all metal hydrides other than $NaAlH_4$ and is not confined to the particular subclasses of metal hydride or specific metal hydrides referred to in the illustration of the invention herein.

By way of example metal hydrides for use in the invention include simple alkali metal hydrides such as LiH, NaH, KH, RbH CsH, hydrides of the elements of main group II metal $BeH_2$ $MgH_2$, $CaH_2$, $SrH_2$, $BaH_2$, metallic-type hydrides e. g. $ScH_2$ $YH_2$ $YH_3$, $TiH_2$, $ZrH_2$ $HfH_2$, VH, $VH_2$ NbH, $NbH_2$, TaH, PdH, rare earth hydrides e.g. $LaH_2$ $CeH_2$ $PrH_2$ $NdH_2$ $SmH_2$, $GdH_2$, $DyH_2$ $TbH_2$ covalent hydrides e.g. CuH, $ZnH_2$, $AlH_3$, $GaH_3$, $InH_3$, $TlH_3$, $SnH_4$, $PbH_4$ and boranes, silanes and germanes, + mixed (complex) hydrides of the above elements, e.g. ternary etc, for example $LiAlH_4$, (Li-Na)$AlH_4$, $LiBH_4$, $NaBH_4$, $KBH_4$, and their non-stoichiometric hydrides and solid solutions.

Metal hydrides have been found to readily react with alcohols, for example with methanol, ethanol or higher alcohols, and the reaction produces a steady and abundant flow of hydrogen at room temperature and below.

Thus the invention has the advantage that the process proceeds conveniently at temperature below 30°C, preferably below 25°C and 20°C and below. Moreover, the amount of the hydrogen released is greater than that obtained from the thermal decomposition of the hydride, because hydrogen comes not only from the hydride, but also from the hydroxyl group of the alcohol.

Table I summarizes nominal hydrogen capacities obtained from various metal hydrides in the alcoholysis reaction of the invention. The hydrogen capacities are given in wt % with respect to the weight of the hydride, and also in hydrogen volume obtained in the alcoholysis reaction from 1 kilogram of the hydride. Total hydrogen capacities, including both the weight of the hydride and weight of alcohol are also listed. Although in some reactions an excess of alcohol is advantageous for the reaction rate, the alcohol excess was not taken into account in the Table. It should be noted here that in the case of more complex reactions, for example involving bi-metallic hydrides (i.e. with two different metal atoms) the overall hydrogen capacities are dependent on the reaction route and may change depending on the applied temperature, catalysis and excess of the alcohol.

TABLE I

| Hydride | wt. % of $H_2$ (in respect to the hydride weight) | Litres of $H_2$ obtained per 1 kg of hydride | Total $H_2$ capacity (including the weight of the hydride **and** the alcohol - methanol) |
|---|---|---|---|
| LiH | 25.4 | 2845 | 5.0 |
| $LiAlH_4$ | 13.2 | 1478 | 7.2 |
| $Li_3AlH_6$ | 16.8 | 1882 | 6.1 |
| $LiBH_4$ | 23.1 | 2592 | 9.4 |
| NaH | 8.3 | 933 | 3.6 |
| $Na_3AlH_6$ | 8.9 | 996 | 4.6 |
| $NaBH_4$ | 13.3 | 1490 | 7.3 |
| $Li_3Be_2H_7$ | 22.0 | 2460 | 7.1 |

TABLE I   (continued)

| Hydride | wt. % of $H_2$ (in respect to the hydride weight) | Litres of $H_2$ obtained per 1 kg of hydride | Total $H_2$ capacity (including the weight of the hydride **and** the alcohol - methanol) |
|---|---|---|---|
| $Li_2BeH_4$ | 22.5 | 2516 | 6.7 |
| $MgH_2$ | 15.3 | 1716 | 4.5 |
| $CaH_2$ | 9.6 | 1074 | 3.8 |
| $FeTiH_2$ | 5.7 | 641 | 2.6 |
| $ZrH_2$ | 4.3 | 484 | 2.6 |
| $TiH_2$ | 8.1 | 905 | 3.5 |
| $MgAl_2H_8$ | 11.7 | 1307 | 6.7 |
| $LiAl_2H_7$ | 11.9 | 1329 | 8.1 |
| $ZrAl_2H_8$ | 6.6 | 737 | 4.6 |

Examples of the specific reactions of hydrogen generation are as follows:

$$LiH + CH_3OH \rightarrow LiOCH_3 + H_2$$

$$NaH + CH_3OH \rightarrow NaOCH_3 + H_2$$

$$LiH + C_2H_5OH \rightarrow LiOC_2H_5 + H_2$$

$$MgH_2 + 2\,C_2H_5OH \rightarrow Mg(OC_2H_5)_2 + 2\,H_2$$

$$Li_3Be_2H_7 + 3\,CH_3OH \rightarrow 3\,LiOCH_3 + 2\,Be + 5\,H_2$$

According to these reactions, metal hydrides produce alkoxides and hydrogen in the reaction with alcohols. Metal alkoxides are derivatives of alcohols (MOR) and constitute an important branch of organometallic chemistry. The research on alkoxides was initiated more than a century ago and now alkoxides find a variety of important applications, for example as drying agents, water-repellents, and paint components. The most common catalytic applications of alkoxides include redox catalysis and olefin polymerization catalysis. Alkoxides are also used as precursors to metal oxides. High purity oxides can be obtained through hydrolysis, pyrolysis or combustion of alkoxides. Metal alkoxides are usually produced by one of the following methods (as widely described for example in a review book "Metal alkoxides" [11]):

- reaction of metals with alcohols
- reaction of metal halides with alcohols
- reaction of metal hydroxides and oxides with alcohols
- alcohol interchange
- transesterification reactions
- reactions of metal dialkylamides with alcohols.

Although alkoxides can be effectively produced by all these techniques and most of the above methods are used on an industrial scale, the formation of alkoxides from hydrides has been never considered in practice probably for a number of reasons. First, the hydrides now found to be very efficient in the generation of hydrogen in the alcoholysis reactions, were previously either very difficult to fabricate, as for example Mg hydride, or $Na_3AlH_6$, or not known, for example Li-Be hydrides, or (Li-Na)-Al hydrides. Only recent advances in metal hydrides synthesis by solid-state reactions enabled easy fabrication of many hydrides [13]. Another reason not to consider formation of alkoxides from hydrides, especially when the use of metals is sufficiently effective, is that the release of hydrogen from the hydride could be a serious complication during the alkoxide production. This potentially negative feature of the alcoholysis reaction is the key of the hydrogen generation in the present invention.

As seen in Table 1, various hydrides can be used for the hydrogen production, and the optimum hydride can be chosen based on the required hydrogen capacity, the hydride cost and the required reaction rate.
Methanol, $CH_3OH$ is the simplest and the lightest of all alcohols, therefore alcoholysis of metal hydrides with methanol gives the highest total hydrogen capacity, as shown in the Table. However, ethanol or higher alcohols provide much better reactivity with certain hydrides, for example complex borohydrides or calcium hydride $CaH_2$. The type of alcohol in the hydrogen generator can be chosen depending on the metal hydride, and also on the required reaction route and kinetics. Since alcohols are easily mixable, a mixture of two or more alcohols can be used in a very wide proportion. For example, a mixture of methanol and ethanol can be used, where methanol provides higher overall hydrogen capacity and ethanol better reactivity. The appropriate proportion of methanol/ethanol mixture can be adjusted during the efficiency testing of the hydrogen generation.

As mentioned above, the crucial advantage of the alcoholysis reaction over the hydrolysis reaction, is the potential of operating at temperatures below the freezing temperature of water. Even more convenient however is to use a mixture of alcohol and water, a common " windshield fluid", to produce hydrogen. In this case, the reaction is a combination of alcoholysis and hydrolysis, with two great enhancements over the hydrolysis alone: a more controllable reaction rate and possible operation at temperatures much below $0°C$. The main advantage of the hydrogen generator based on the combined hydrolysis and alcoholysis is its flexibility to the "reactive liquid" used. The "reactive liquid", i. e. the mixture of alcohol, or alcohols, with water can be adjusted depending on the climate or season, with a higher proportion of alcohol in the liquid when operating at lower temperatures is required, and with more water when more rapid hydrogen desorption is needed.
In certain cases, as for example in the case of alkali metal borohydrides, for example, $LiBH_4$ and $NaBH_4$, the alcoholysis reaction needs to be catalyzed in order to increase the reaction rate. The addition of a solid-state catalyst can be very efficient in enhancing the reaction kinetics. Various catalysts can be used for this purpose, depending on the metal hydride and on the alcohol, for example iodine and its compounds, chlorides, or various metals, e.g. Ru, Ni, Ti and Fe and their compounds. The catalyst can be introduced either in the solid state, admixed to the hydride, or in a solution with alcohol, or dissolved in another, neutral solvent.

A single type of hydride can be used in the hydrogen generator, but in some cases a mixture of two or more hydrides can be more advantageous. The main reason for using a mixture of hydrides is modification of the reaction rate or catalysis. Usually there is no inter-reaction in the mixture of two hydrides in the powdered form at room temperature. However, when the mixture is immersed in alcohol, the reaction route, and the reaction rate, can be completely changed, as compared to the two hydrides alone. This can be effected by either formation of hetero-alkoxides, or by a combined, synergetic reaction, where the more reactive component induces the reaction of the "slower" component. This can be particularly advantageous when the slow hydride is inexpensive and has high hydrogen capacity, and the fast hydride is more expensive or difficult to fabricate. The fast reaction can induce and promote the second reaction in a synergetic way, as shown for example for hydrogen desorption in a mixture of $MgH_2$ and $Mg_2NiH_4$ [13].
Usually the most convenient form for the hydride, or hydrides, inside the generator before adding alcohol, or its mixture with water, is in the solid state, typically in a powdered form. However, when a fast refilling of the hydride container is required, the hydride may be contained in a neutral solvent, for example tetrahydrofuran or toluene, and so easily pumped into the tank.

The alcohol may be in liquid, gaseous or vapor state.

As described above, the alcoholysis reaction of metal hydrides leads to the formation of metal alkoxides. There are two ways of dealing with the reaction products, i.e. recovering the metals. In some cases, simple hydrolysis or pyrolysis of the alkoxides gives a very valuable oxide product of very high purity and dispersion, which is ideal for many catalytic applications. An example is magnesium oxide, zirconium oxide or titanium oxide. Alkali metals in contrast, form hydroxides, for example LiOH or NaOH, as a result of hydrolysis of the respective alkoxides, which can be subsequently thermally decomposed into lithium and sodium hydrides and returned into the hydrogen generator.

In a typical reduction to practice, the metal hydride, or a mixture of two or more hydrides, is allowed to react with alcohol simply by pouring or injecting the alcohol into the hydride container. As a result of the alcoholysis reaction, hydrogen gas is released. Hydrogen is directed toward a fuel cell system. Controlling the supply of alcohol, or a mixture of alcohol and water, can easily control the rate of reaction and the release of hydrogen. Gradual feeding with the "reactive liquid" regulates the amount of the produced hydrogen, and the reaction can be thus stopped or increased depending on the demand for hydrogen. In a practical way it is effected through an injection system, which reduces the supply of the "reactive liquid" in response to the increasing pressure of the produced hydrogen.

The invention also relates to a hydrogen generator as described hereinbefore. A typical hydrogen generator may have the following features or components:

1. A container with metal hydride, preferably being in a powder form, or in a solution in a neutral liquid. The container can consist of a single reaction chamber, but for large-scale application several separate reaction chambers can be more advantageous in order to have better control of the reaction.

2. A container with the "reactive liquid", e.g. the alcohol, a mixture of alcohols or a mixture of alcohol with water.

3. An injection system with a regulator for the controlled supply of the "reactive liquid" to the metal hydride.

4. A hydrogen outlet towards the fuel cell system, with pressure controller and safety gauge.

The above hydrogen generator can be used either as a main source of hydrogen for fuel cells, or as a start-up device only. In the latter case, the main hydrogen supply can be provided for example by thermal decomposition of metal hydrides.

**BRIEF DESCRIPTION OF DRAWINGS**

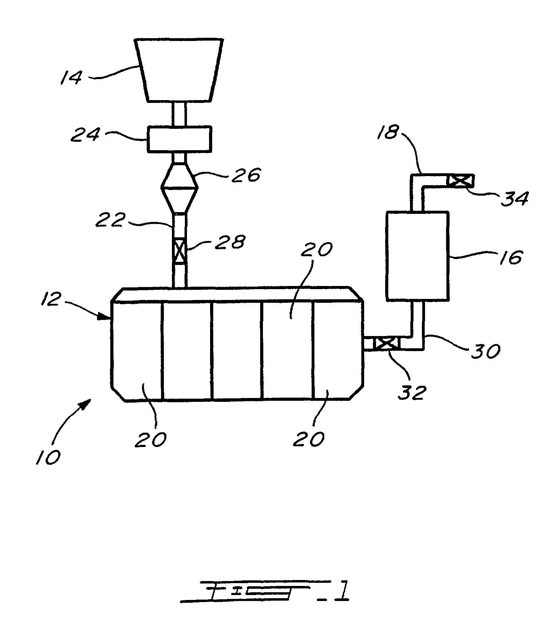

Fig. 1 is a schematic representation of a hydrogen generator of the invention.

**DETAILED DESCRIPTION OF DRAWINGS**

With further reference to Fig. 1, a hydrogen generator 10 comprises a container 12 for metal hydride, a container 14 for a reservoir of an alcohol, a hydrogen collection tank 16 and a hydrogen outlet conduit 18.

Container 12 as illustrated is modular having a plurality of discrete and separate compartments 20 for metal hydride. A feed conduit 22 connects the container 14 with a selected compartment 20.

Included in feed conduit 22 is a heater/cooler 24, as an optional component, a feed injector 26 and a valve 28 which controls the feed of the alcohol to the selected compartment 20.

A conduit 30 having a valve 32 communicates container 12 with tank 16; a valve 34 is disposed in hydrogen outlet conduit 18.

In operation an alcohol or a mixture of alcohols or an aqueous alcohol or alcohol mixture is injected from container 14 to a selected compartment 20, optionally with heating or cooling in heater/cooler 24. The alcohol or other reactive alcohol mixture, with the metal hydride in the selected compartment 20 of container 12 with generation of hydrogen gas which flows from container 12 to tank 16. Hydrogen is delivered from tank 16 via conduit 18 as required, for example, to a hydrogen fuel cell.

When the selected compartment is depleted in the metal hydride the modular compartment 20 may be replaced by a new compartment having a fresh supply of metal hydride. The metal alkoxide by-product may be recovered from the exchanged modular compartment.

Although the above reactions of alcohols with metal hydrides are aimed mainly towards the generation of hydrogen, they may actually also open the door to better ways for the formation of various metal alkoxides. In certain cases, complex alkoxides cannot be produced by a simple alcoholysis of metals or other compounds and the reaction with the respective hydride is the only way to produce these new alkoxides. An outstanding example is a newly synthesized $Li_3Be_2H_7$ hydride. In the dehydrogenated form the material simply consists of a mixture of two immiscible metals: Li and Be. In the hydrogenated state however, hydrogen atoms bond Li and Be together, forming a hydride. Therefore, the alcoholysis reaction with the $Li_3Be_2H_7$ is different (under certain experimental conditions) than that with Li and Be alone, and therefore more complex compounds can be formed: bi-metallic alkoxides i.e. containing two different metal atoms. This reaction was only possible after an efficient method of the hydride formation was developed, as described in reference [14]. Other "double" hydrides (for example $LaNi_5H_6$, $FeTiH_2$ or $Mg_2NiH_4$) also offer the possibility of producing unique, double alkoxides, for which this reaction path was never considered before.

In a particular embodiment the method employs a combination of an alcohol and water, this combination gives the following advantages:

- maximization of the hydrogen production (because both reactions fully contribute to the hydrogen generation)
- fully controllable reaction rate (and route) through the adjustable contribution of the two reactions in the process (by the alcohol-to-water ratio)
  For example, the normally "explosive" hydrolysis of $LiAlH_4$ can be tamed and controlled by the addition of alcohol, without scarifying the hydrogen capacity
- Certain hydrides, for example borohydrides do not undergo hydrolysis without special catalysis, but the addition of alcohol can change their activity (or reaction route) in such a way, that hydrogen generation may proceed effectively, without the loss of hydrogen capacity
- The use of combined alcoholysis and hydrolysis extends the temperature range of the hydrogen production towards temperatures below freezing temperature of water.

References:

1. "Ti-doped alkali metal aluminium hydrides as potential novel reversible hydrogen storage materials" B. Bogdanovic, M. Schwickardi, J. Alloys Comp. 253 (1997) 1
2. "Sodium alanates for reversible hydrogen storage" A. Zaluska, L. Zaluski and J.O. Ström-Olsen, J. Alloys Comp. 298 (2000) 125
3. "Miniature hydrogen generator", W.G. Taschek, U.S. Pat. No. 4,155,712
4. "Process for the production of hydrogen", J.G. Davidson, U.S. Pat. No 4,356,163
5. "Hydrogen transmission/storage with a chemical hydride/organic slurry" R. Breault, Proceedings of 9th Canadian Hydrogen Conference, Vancouver, BC, Canada 1999, 393
6. "Portable hydrogen generator" E. Long, J. Schmidt and F. Lynch, U.S. Patent No 5,593,640
7. "Hydrogen generation system and pelletized fuel" J.H. Checketts, U.S. Patent No 5,728,464
8. "Hydrogen generation system and pelletized fuel" J.H.Checketts, US Patent No 5,817,157
9. "An ultrasafe hydrogen generator: aqueous, alkaline borohydride solutions and Ru catalyst" S.C. Amendola, S. L. Sharp-Goldman, M.S. Janjua, M.T. Kelly, P.J. Petillo and M. Binder, Journal of Power Sources 85 (2000) 186
10. "Production of hydrogen from chemical hydrides via hydrolysis with steam" R. Aiello, J.H. Sharp, M.A. Matthews, International Journal of Hydrogen Energy 24 (1999) 1123
11. "Metal alkoxides" D.C. Bradley, R.C. Mehrotra and D.P. Gaur, Academic Press, London, 1979
12. "Hydrogenation properties of complex alkali metal hydrides fabricated by mechano-chemical synthesis" L. Zaluski, A. Zaluska, and J.O. Ström-Olsen, J. Alloys Comp. 290 (1999) 71
13. "Synergy of hydrogen sorption in ball-milled hydrides of Mg and $Mg_2Ni$" A. Zaluska, L. Zaluski and J.O. Ström-Olsen, J. Alloys Comp. 289 (1999) 197
14. "Lithium-beryllium hydrides: the lightest reversible metal hydrides" A. Zaluska, L. Zaluski and J.O. Ström-Olsen, J. Alloys Comp. 307 (2000) 157-166.

## Claims

**1.** A process for generating hydrogen for a fuel cell comprising:

reacting a metal hydride other than $NaAlH_4$ with at least one alcohol to generate hydrogen, and feeding the hydrogen to a hydrogen compartment of a fuel cell.

**2.** A process according to claim 1, wherein said at least one alcohol is of formula ROH in which R is an alkyl group of 1 to 10, preferably 1 to 6, more preferably 1 to 4 carbon atoms.

**3.** A process according to claim 1 or 2, wherein said at least one alcohol is an aqueous alcohol, and preferably comprises a mixture of two or more alcohols.

**4.** A process according to any one of daims 1 to 3, wherein said metal hydride is a simple metal hydride.

**5.** A process according to claim 4, wherein said simple hydride is of a metal selected from the group consisting of Li, Na, K, Mg, Ca, Zr and Ti.

**6.** A process according to any one of daims 1 to 3, wherein said metal hydride is a complex metal hydride.

**7.** A process according to daim 6, wherein said complex hydride is represented by the formula:

$$M^2{}_v M^3{}_w H_y$$

in which
$M^2$ is a metal selected from the group consisting of Li, Na, K, Mg, Ca, Fe and Zr;
$M^3$ is selected from the group consisting of Al, B, Be and Ti;

v is an integer of 1 to 3;
w is an integer of 1 to 3; and
y is an integer of 4 to 8.

8. A process according to any one of claims 1 to 7, wherein said metal hydride is contained in a first housing and said at least one alcohol is housed in a second housing, and wherein said at least one alcohol is fed from said second housing to said first housing and reacts with said metal hydride in said first housing, recovering generated hydrogen from said first housing and feeding the generated hydrogen to said hydrogen compartment.

9. A fuel cell comprising a hydrogen generator and a hydrogen compartment; said hydrogen generator comprising:

a) a first housing containing a metal hydride other than $NaAlH_4$;
b) a second housing containing at least one alcohol for reaction with said metal hydride;
c) flow means for delivery of said at least one alcohol from said second housing to said first housing; and
d) hydrogen gas outlet means in said first housing for delivery of generated hydrogen gas from said first housing to said hydrogen compartment.

10. A cell according to claim 9, wherein said flow means indudes control means for controlled delivery of said at least one alcohol from said second housing to said first housing.

11. A cell according to claim 9 or 10, wherein said hydrogen gas outlet means indudes control means for controlling delivery of the generated hydrogen gas from the first housing.

12. A cell according to claim 9, 10 or 11, wherein said at least one alcohol is of formula, ROH in which R is an alkyl group of 1 to 10 carbon atoms, preferably 1 to 6, more preferably 1 to 4 carbon atoms.

13. A cell according to any one of claims 9 to 12, wherein said at least one alcohol is an aqueous alcohol, and preferably comprises a mixture of two or more alcohols.

14. A cell according to any one of claims 9 to 13, wherein said metal hydride is a simple metal hydride.

15. A cell according to claim 14, wherein said simple hydride is of a metal selected from the group consisting of Li, K, Na, Mg, Ca, Zr and Ti.

16. A cell according to any one of daims 9 to 13, wherein said metal hydride is a complex metal hydride.

17. A cell according to claim 16, wherein said complex hydride is represented by the formula:

$$M^2{}_v M^3{}_w H_y$$

in which
$M^2$ is a metal selected from the group consisting of Li, Na, K, Mg, Ca, Fe and Zr;
$M^3$ is selected from the group consisting of Al, B, Be and Ti;
v is an integer of 1 to 3;
w is an integer of 1 to 3; and
y is an integer of 4 to 8.

**Patentansprüche**

1. Verfahren zur Erzeugung von Wasserstoff für eine Brennstoffzelle, umfassend:

Umsetzen eines Metallhydrids, das von $NaAlH_4$ verschieden ist, mit wenigstens einem Alkohol unter Bildung von Wasserstoff und Einspeisen des Wasserstoffs in eine Wasserstoffkammer einer Brennstoffzelle.

2. Verfahren gemäß Anspruch 1, wobei der wenigstens eine Alkohol die Formel ROH hat, wobei R eine Alkylgruppe mit 1 bis 10, vorzugsweise 1 bis 6, besonders bevorzugt 1 bis 4 Kohlenstoffatomen ist.

3. Verfahren gemäß Anspruch 1 oder 2, wobei der wenigstens eine Alkohol ein wässriger Alkohol ist und vorzugsweise ein Gemisch von zwei oder mehr Alkoholen umfasst.

4. Verfahren gemäß einem der Ansprüche 1 bis 3, wobei das Metallhydrid ein einfaches Metallhydrid ist.

5. Verfahren gemäß Anspruch 4, wobei das einfache Hydrid von einem Metall ist, das aus der Gruppe ausgewählt ist, die aus Li, Na, K, Mg, Ca, Zr und Ti besteht.

6. Verfahren gemäß einem der Ansprüche 1 bis 3, wobei das Metallhydrid ein komplexes Metallhydrid ist.

7. Verfahren gemäß Anspruch 6, wobei das komplexe Hydrid durch die Formel

$$M^2{}_v M^3{}_w H_y$$

dargestellt wird, wobei
$M^2$ ein Metall ist, das aus der Gruppe ausgewählt ist, die aus Li, Na, K, Mg, Ca, Fe und Zr besteht;
$M^3$ aus der Gruppe ausgewählt ist, die aus Al, B, Be und Ti besteht;
v eine ganze Zahl von 1 bis 3 ist;
w eine ganze Zahl von 1 bis 3 ist; und
y eine ganze Zahl von 4 bis 8 ist.

8. Verfahren gemäß einem der Ansprüche 1 bis 7, wobei das Metallhydrid in einem ersten Gehäuse enthalten ist und der wenigstens eine Alkohol in einem zweiten Gehäuse untergebracht ist und wobei der wenigstens eine Alkohol aus dem zweiten Gehäuse in das erste Gehäuse geleitet wird und mit dem Metallhydrid in dem ersten Gehäuse reagiert, wobei man den erzeugten Wasserstoff aus dem ersten Gehäuse gewinnt und den erzeugten Wasserstoff in die Wasserstoffkammer einspeist.

9. Brennstoffzelle mit einem Wasserstoffgenerator und einer Wasserstoffkammer, wobei der Wasserstoffgenerator Folgendes umfasst:

a) ein erstes Gehäuse, das ein Metallhydrid enthält, welches von $NaAlH_4$ verschieden ist;

b) ein zweites Gehäuse, das wenigstens einen Alkohol zur Reaktion mit dem Metallhydrid enthält;

c) eine Fließeinrichtung zur Überleitung des wenigstens einen Alkohols aus dem zweiten Gehäuse in das erste Gehäuse; und

d) eine Wasserstoffgas-Auslasseinrichtung in dem ersten Gehäuse zur Überleitung von erzeugtem Wasserstoffgas aus dem ersten Gehäuse in die Wasserstoffkammer.

10. Zelle gemäß Anspruch 9, wobei die Fließeinrichtung eine Steuereinrichtung für die kontrollierte Überleitung des wenigstens einen Alkohols aus dem zweiten Gehäuse in das erste Gehäuse aufweist.

11. Zelle gemäß Anspruch 9 oder 10, wobei die Wasserstoffgas-Auslasseinrichtung eine Steuereinrichtung für die kontrollierte Überleitung des erzeugten Wasserstoffgases aus dem ersten Gehäuse aufweist.

12. Zelle gemäß Anspruch 9, 10 oder 11, wobei der wenigstens eine Alkohol die Formel ROH hat, wobei R eine Alkylgruppe mit 1 bis 10, vorzugsweise 1 bis 6, besonders bevorzugt 1 bis 4 Kohlenstoffatomen ist.

13. Zelle gemäß einem der Ansprüche 9 bis 12, wobei der wenigstens eine Alkohol ein wässriger Alkohol ist und vorzugsweise ein Gemisch von zwei oder mehr Alkoholen umfasst.

14. Zelle gemäß einem der Ansprüche 9 bis 13, wobei das Metallhydrid ein einfaches Metallhydrid ist.

15. Zelle gemäß Anspruch 14, wobei das einfache Hydrid von einem Metall ist, das aus der Gruppe ausgewählt ist, die aus Li, Na, K, Mg, Ca, Zr und Ti besteht.

**16.** Zelle gemäß einem der Ansprüche 9 bis 13, wobei das Metallhydrid ein komplexes Metallhydrid ist.

**17.** Zelle gemäß Anspruch 16, wobei das komplexe Hydrid durch die Formel

$$M_v^2 M_w^3 H_y$$

dargestellt wird, wobei
$M^2$ ein Metall ist, das aus der Gruppe ausgewählt ist, die aus Li, Na, K, Mg, Ca, Fe und Zr besteht;
$M^3$ aus der Gruppe ausgewählt ist, die aus Al, B, Be und Ti besteht;
v eine ganze Zahl von 1 bis 3 ist;
w eine ganze Zahl von 1 bis 3 ist; und
y eine ganze Zahl von 4 bis 8 ist.

**Revendications**

**1.** Un procédé de génération d'hydrogène pour une pile à combustible comprenant :

faire réagir un hydrure d'un métal autre que $NaAlH_4$ avec au moins un alcool pour engendrer de l'hydrogène, et introduire l'hydrogène dans un compartiment à hydrogène d'une pile à combustible.

**2.** Un procédé selon la revendication 1, dans lequel ledit alcool est de formule ROH dans laquelle R est un groupement alkyl de 1 à 10, de préférence 1 à 6, plus préférablemént 1 à 4 atomes de carbone.

**3.** Un procédé selon la revendication 1 ou 2, dans lequel ledit alcool est un alcool aqueux, et comprend de préférence un mélange de deux alcools ou plus.

**4.** Un procédé selon l'une quelconque des revendications 1 à 3, dans lequel ledit hydrure d'un métal est un hydrure de métal simple.

**5.** Un procédé selon la revendication 4, dans lequel ledit hydrure simple est d'un métal choisi dans le groupe constitué par Li, Na, K, Mg, Ca, Zr et Ti.

**6.** Procédé selon l'une des revendications 1 à 3, dans lequel ledit hydrure de métal est un hydrure de métal complexe.

**7.** Un procédé selon la revendication 6, dans lequel ledit hydrure complexe est représenté par la formule :

$$M_v^2 M^3 w H_y$$

dans laquelle
$M^2$ est un métal choisi parmi le groupe constitué par Li, Na, K, Mg, Ca, Fe et Zr;
$M^3$ est choisi parmi le groupe constitué par Al, B, Be et Ti;
v est un nombre entier de 1 à 3;
w est un nombre entier de 1 à 3; et
y est un nombre entier de 4 à 8.

**8.** Un procédé selon l'une quelconque des revendications 1 à 7, dans lequel ledit hydrure de métal est renfermé dans une première enceinte et ledit alcool est renfermé dans une seconde enceinte, et dans lequel ledit alcool est alimenté de la seconde enceinte à la première enceinte et réagit avec ledit hydrure de métal dans ladite première enceinte, on recouvre l'hydrogène engendré dans la première enceinte et on introduit l'hydrogène engendré dans ledit compartiment à hydrogène.

**9.** Une pile à combustible comprenant un générateur d'hydrogène et un compartiment d'hydrogène, ledit générateur d'hydrogène comprenant :

a) une première enceinte renfermant un hydrure de métal autre que $NaAlH_4$;

b) une seconde enceinte renfermant au moins un alcool pour réaction avec ledit hydrure de métal;

c) un moyen d'écoulement pour amener ledit alcool depuis la seconde enceinte à la première enceinte; et

d) un moyen de sortie d'hydrogène gazeux prévu dans ladite première enceinte pour amener l'hydrogène gazeux engendré depuis la première enceinte jusqu'au compartiment d'hydrogène.

10. Une pile selon la revendication 9, dans laquelle ledit moyen d'écoulement comporte un moyen de distribution contrôlée dudit alcool depuis la seconde enceinte à la première enceinte.

11. Une pile selon la revendication 9 ou 10, dans laquelle ledit moyen de sortie d'hydrogène gazeux comporte un moyen de contrôle pour assurer la distribution contrôlée de l'hydrogène gazeux engendré depuis la première enceinte.

12. Une pile selon la revendication 9, 10 ou 11, dans laquelle le dit alcool possède la formule ROH dans laquelle R est un groupement alkyle de 1 à 10 atomes de carbone, de préférence 1 à 6, plus préférablement 1 à 4 atomes de carbone.

13. Une pile selon l'une quelconque des revendications 9 à 12, dans laquelle ledit alcool est un alcool aqueux, et comprend de préférence un mélange de deux alcools ou plus.

14. Une pile selon l'une quelconque des revendications 9 à 13, dans laquelle ledit hydrure de métal est un hydrure de métal simple.

15. Une pile selon la revendication 14, dans laquelle ledit hydrure simple en est un d'un métal choisi dans le groupe constitué par Li, K, Na, Mg, Ca Zr, et Ti.

16. Une pile selon l'une quelconque des revendications 9 à 13, dans laquelle ledit hydrure de métal est un hydrure de métal complexe.

17. Une pile selon la revendication 16, dans laquelle ledit hydrure complexe est représenté par la formule

$$M_v^2 M_w^3 H_y$$

dans laquelle

$M^2$ est un métal choisi parmi le groupe constitué par Li, Na, K, Mg, Ca, Fe et Zr;

$M^3$ est choisi parmi le groupe constitué par Al, B, Be et Ti;

v est un nombre entier de 1 à 3;

w est un nombre entier de 1 à 3; et

y est un nombre entier de 4 à 8.

_FIG. 1_